# FASCICULE DE BREVET EUROPEEN

(11) **EP 2 118 825 B1**
(45) Date de publication et mention de la délivrance du brevet: **22.11.2017**
(21) Numéro de dépôt: 07872458.0
(22) Date de dépôt: 28.12.2007
(51) Int. Cl.: G06Q 20/00, G06F 9/445, G06F 21/00, G07F 7/10

(54) **ENTITÉ ÉLECTRONIQUE PORTABLE ET PROCÈDE DE COMMUNICATION**
TRAGBARE ELEKTRONISCHE ENTITÄT UND KOMMUNIKATIONSVERFAHREN
PORTABLE ELECTRONIC ENTITY AND COMMUNICATION METHOD

(30) Priorité: 12.02.2007 FR 0753197
(43) Date de publication de la demande: 18.11.2009
(73) Titulaire: Oberthur Technologies, 92700 Colombes (FR)
(72) Inventeur: BERTIN, Marc, F-78720 La Celle les Bordes (FR)
(74) Mandataire: Santarelli
(86) Numéro de dépôt international: PCT/FR2007/002184
(87) Numéro de publication internationale: WO 2008/102082

(56) Documents cités:
- EP-A- 1 260 931
- EP-A- 1 675 076
- WO-A-2005/050384
- WO-A-2006/048515
- WO-A-2006/121310
- WO-A1-00/42491
- US-A1- 2003 087 601
- US-A1- 2004 104 268
- US-A1- 2005 274 803
- US-A1- 2006 208 066

## Description

La présente invention concerne une entité électronique portable faisant office de terminal. Elle s'applique, en particulier à la réalisation d'une clef électronique dite « USB » (acronyme de « Universal Serial Bus » pour bus série universel), c'est-à-dire une clef dont l'interface physique avec un ordinateur hôte est conforme à la spécification USB, et apte à communiquer selon un protocole conforme à la spécification USB, cette clef faisant office de terminal pour une carte à puce sans contact.

On définit une clef USB, comme un dispositif électronique de poche, disposé dans un corps allongé qui comporte, préférentiellement, dans son prolongement un connecteur mettant en oeuvre le protocole USB. La longueur d'une telle clef ne dépasse pas 10 cm, et est préférentiellement inférieure à 6 cm, la largeur et l'épaisseur sont inférieures à 5 cm, préférentiellement inférieures à 3 cm. Dans le cas où on utilise une clef USB sans fil, le connecteur USB peut être remplacé par une antenne éventuellement logée dans ledit corps allongé.

Par exemple, la demande de brevet WO 2005/050384 décrit un dispositif compact personnel de type clé mémoire USB. Celui-ci peut être branché sur un ordinateur et servir d'interface vers le monde virtuel d'Internet. Le dispositif est capable de charger et de stocker des informations provenant d'Internet via le PC dans une mémoire flash pour permettre ensuite d'utiliser les informations ou valeurs stockées en utilisant une interface sans fil dans le monde réel. A ces fins, ce dispositif est capable d'échanger des informations avec d'autres dispositifs possédant des interfaces compatibles. L'appareil peut également fonctionner comme un pare-feu lorsqu'il est branché entre une connexion Internet et un PC.

De même, la demande de brevet EP 1 675 076 décrit un kit comprenant notamment une clé USB, un système de radiocommunication permettant d'activer des tags RFID et un système de détection de présence et d'identification personnelle ainsi qu'une méthode de reconnaissance d'un utilisateur et personnalisation d'un terminal pour des communications authentifiées. La demande de brevet US 2004/0104268 A1 décrit un lecteur portable de carte pour être connecté à un téléphone mobile via RS-232 ou USB. Ce lecteur de carte comporte des moyens cryptographiques pour chiffrer des données d'une carte lue par ce lecteur et pour transmettre ces données chiffrées à un serveur distant, par l'intermédiaire du téléphone mobile. Aujourd'hui, le commerce électronique comporte :
- soit un obstacle de sécurité : le porteur doit, par exemple, saisir le numéro de sa carte bancaire sur un navigateur (en anglais « browser ») de la toile (en anglais « web »), numéro qui peut être, par exemple, obtenu et transmis à un tiers malintentionné (par l'intermédiaire du réseau internet par exemple) par un programme espion installé frauduleusement sur l'ordinateur utilisé pour réaliser la transaction.
- soit un obstacle de complexité : par exemple, pour sécuriser la transaction, l'utilisateur doit :
   - au moins installer, c'est-à-dire relier connecter à un ordinateur et installer les pilotes (en anglais « drivers »), un lecteur de carte et une application capable de gérer la transaction qui fait intervenir le lecteur de carte, la carte et un serveur distant auprès duquel s'effectue l'achat ou la transaction.
   - et, éventuellement, disposer d'un terminal sécurisé capable de sécuriser la connexion avec la carte et la connexion avec le serveur distant auprès duquel s'effectue l'achat ou la transaction, dans le cas où la carte et le serveur n'auraient pas de moyens pour sécuriser les communications, entre eux, des données confidentielles telles que le numéro de carte bancaire.

La présente invention vise à remédier à ces inconvénients.

A cet effet, la présente invention vise, selon un premier aspect, une entité électronique portable de poche comportant des moyens de connexion amovibles à une station hôte, qui comporte, en outre :
- des premiers moyens de communication sécurisée avec un serveur distant par l'intermédiaire desdits moyens de connexion et de ladite station hôte,
- des deuxièmes moyens de communication entre lesdits premiers moyens de communication sécurisée et une deuxième entité électronique portable et
- des moyens pour communiquer audit serveur distant, par lesdits premiers moyens de communication sécurisée, des données reçues de la deuxième entité électronique portable, par les deuxièmes moyens de communication
l'entité électronique portable comportant des moyens de mémorisation d'un programme de gestion de la transaction avec ledit serveur apte à être exécuté par ladite station hôte, ledit programme de gestion étant chargé et exécuté sur détection de la connexion de l'entité électronique à la station hôte_{,} permettant au serveur distant et à l'entité électronique portable de s'authentifier mutuellement en mettant en oeuvre des clés maîtres qu'ils conservent respectivement et qui se correspondent et des moyens cryptographiques de l'entité électronique portable, le serveur et l'entité électronique portable créant une clé commune temporaire à partir de la clé maître et d'un numéro de série d'une carte de l'entité électronique.

Grâce à ces dispositions, l'entité électronique portable objet de la présente invention constitue un moyen particulièrement simple, par exemple pour installer à la fois un lenteur de cartes à puce et l'application capable de gérer la transaction qui fait intervenir, le lecteur, la carte et un serveur distant auprès duquel s'effectue l'achat, ou plus généralement une transaction. Le type de clef dit « USB » est commode à transporter, et largement reconnu et accepté par le public. De plus, ce type de clef permet généralement de se passer de l'installation de pilote (en anglais « driver ») sur la station hôte. Grâce à la présente invention, elle est utilisée pour sécuriser et effectuer des transactions sur n'importe qu'elle ordinateur personnel. Ainsi sécurisée par les moyens de communication sécurisés, la première entité électronique portable joue le rôle de terminal sécurisé.

Selon des caractéristiques particulières, au moins un desdits deuxièmes moyens de communication comporte des moyens de sécurisation.

Grâce à ces dispositions, il n'est pas possible d'espionner la communication entre la deuxième entité électronique et lesdits moyens de communication sécurisée, pour obtenir, par exemple, le numéro de carte bancaire.

Selon des caractéristiques particulières, les moyens de sécurisation comportent des moyens cryptographiques.

Grâce à chacune de ces dispositions, la sécurité de l'entité électronique portable est accrue.

Selon des caractéristiques particulières, les premiers moyens de communication sécurisée avec un serveur distant comportent des moyens d'authentification avec ledit serveur distant.

Grâce à ces dispositions, la sécurité des communications entre l'entité électronique portable et le serveur est accrue.

Selon des caractéristiques particulières, les premiers moyens de communication sécurisée, avec un serveur distant, comportent des moyens de communication d'une donnée d'identification de la transaction.

Selon des caractéristiques particulières, les premiers moyens de communication sécurisée avec un serveur distant comportent des moyens cryptographiques.

On dispose ainsi de moyens pratiques et biens connus de l'homme du métier pour sécuriser une communication.

Selon des caractéristiques particulières, les deuxièmes moyens de communication sont des moyens de communication sans fils.

Selon des caractéristiques particulières, les moyens de communication sans fils sont des moyens de communication à courte portée, inférieure à un mètre. Grâce à ces dispositions, on limite, par exemple, les risques de piratage entre la clef USB et la deuxième entité électronique et/ou on permet la réalisation de transaction basée sur un geste volontaire du porteur : par exemple, le porteur approche une carte sans contact ou un téléphone mobile comportant des moyen de communication sans contact à très courte portée.

Selon des caractéristiques particulières, les deuxièmes moyens de communication sont formés par un lecteur d'entité électronique portable.

Selon des caractéristiques particulières, le lecteur d'entité électronique portable est un lecteur de carte à microcircuit.

Selon des caractéristiques particulières, le lecteur de carte à microcircuit est conforme à la norme ISO 14443 ou, en variante, à la norme ISO 15693. Ces dispositions lui permettent de lire des cartes, ou plus généralement des entités électroniques portables, par exemple des téléphones ou des assistants personnels numériques, comportant des moyens de communication conformes à la norme ISO 14443 ou à la norme ISO 15693 dans la variante où le lecteur est conforme à cette même norme ISO 15693. On note que, selon ces normes, le lecteur alimente et envoie des commandes à une entité électronique portable par émission d'un champ radio. Pour répondre, l'entité électronique répond par rétro-modulation de ce champ radio.

Selon des caractéristiques particulières, les premiers moyens de communication sécurisée comportent une carte à microcircuit.

Selon des caractéristiques particulières, l'entité électronique portable est une clef électronique dite « USB » (acronyme de « Universal Serial Bus » pour bus série universel).

Les avantages, buts et caractéristiques particulières de ce procédé étant similaires à ceux de l'entité électronique portable, telle que succinctement exposée ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, une entité électronique portable objet de la présente invention et des éléments avec lesquels elle communique et
- la figure 2 représente, sous forme d'un logigramme, des étapes mises en oeuvre dans un mode de réalisation particulier du procédé objet de la présente invention.

Dans le mode de réalisation décrit dans les figures, la présente invention est appliquée à une clef USB faisant office de terminal pour une carte bancaire à communication sans contact. Cependant, la présente invention ne se limite pas à ce type d'entité électronique portable ni à ce type de carte.

On définit une clef USB, comme un dispositif électronique disposé dans un corps allongé qui comporte, préférentiellement, dans son prolongement un connecteur USB. La longueur d'une telle clef ne dépasse pas 10 cm, et est préférentiellement inférieure à 6 cm, la largeur et l'épaisseur sont inférieures à 5 cm, préférentiellement inférieures à 3 cm. Dans le cas où on utilise une clef USB sans fil, le connecteur USB peut être remplacé par une antenne éventuellement logée dans ledit corps allongé.

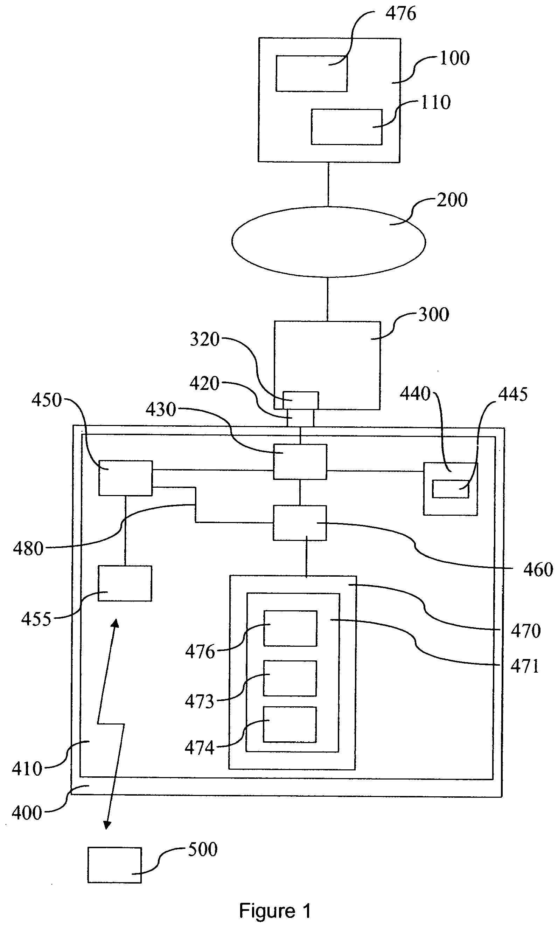

Tout d'abord, on note que la figure 1, qui va maintenant être décrite, n'est pas à l'échelle. On observe, en figure 1, un serveur 100, un réseau informatique 200, une station hôte 300, une entité électronique portable objet de la présente invention 400 et une deuxième entité électronique portable 500.

Le serveur 100 est un serveur de site de la toile, distant de l'entité électronique portable 400. Le serveur 100 est, par exemple, un serveur de site marchand, sur lequel des transactions, pas nécessairement financières, peuvent être réalisées. Le serveur 100 conserve, en mémoire, une clef maître 110 permettant de générer une clef de session 476.

Le réseau informatique 200, par exemple le réseau internet, relie le serveur 100 à la station hôte 300. La station hôte 300 est, par exemple, un ordinateur personnel de type connu, doté de logiciels de communication et de navigation sur la toile et de communication avec l'entité électronique portable 400, selon le protocole USB. La station hôte 300 comporte un connecteur USB 320.

La deuxième entité électronique portable 500 est, par exemple, une carte bancaire à communication sans contact conforme à la norme ISO14443.

L'entité électronique portable 400 comporte un circuit électronique 410 et un moyen de connexion amovible à la station hôte 300, sous la forme d'un connecteur USB 420. Le circuit électronique 410 comporte un hub USB 430 qui répartit les communications avec la station hôte 300 entre un microcontrôleur 440, un lecteur de carte 460 et un lecteur de carte 450 conforme à la norme ISO 15693. Le microcontrôleur 440 est de type connu, à mémoire non volatile, par exemple de type ROM (acronyme de « Read Only Memory » pour mémoire morte), EEPROM (acronyme de « Electrically Erasable Read Only Memory pour mémoire effaçable électriquement) ou flash. Le microcontrôleur 440 est adapté, de manière connue en soi, à simuler un lecteur de CD-ROM (acronyme de « Compact-Disc Read Only Memory » pour disque compact non ré-inscriptible), c'est-à-dire une mémoire de masse (en anglais « mass storage ») de type CD-ROM, conforme à la norme USB. Le microcontrôleur 440 conserve en mémoire les instructions d'un programme à lancement automatique (en anglais « autorun ») 445 qui se charge dans la mémoire de la station hôte 300 et s'y exécute automatiquement, dès que la connexion est établie entre la station hôte 300 et l'entité électronique portable 400.

Le lecteur de carte 460 est adapté à lire une carte 470, par exemple une carte à puce au format « ID.000 », c'est-à-dire au format d'une carte SIM (acronyme de « Subscriber Identification Module» pour module d'identification d'abonné). La carte 470 comporte un microcontrôleur sécurisé 471 qui conserve, en mémoire non volatile, une clef maître 473 correspondant à la clé maître 110 du serveur 100 et un numéro de série 474 de la carte 470.

Le lecteur 450 est relié à une antenne 455 pour la communication sans contact, à courte portée, avec l'entité électronique portable 500.

Les lecteurs 450 et 460 sont reliés entre eux par l'intermédiaire du lien 480.

Ainsi, l'entité électronique portable 400, une clef USB dans le mode de réalisation décrit en figure 1, comporte des moyens de connexion amovibles 420 à une station hôte 300 conformes à la norme USB ainsi que des premiers et deuxième moyens de communication :
Les premiers moyens de communication sécurisée avec le serveur distant 100, mettant en oeuvre, pour la sécurisation, le microcontrôleur sécurisé 471 et communicant avec le serveur 100 par l'intermédiaire des moyens de connexion amovibles 420 et de la station hôte 300. Dans le mode de réalisation illustré en figure 1, la station hôte 300 communique avec le serveur distant 100 par l'intermédiaire du réseau informatique 200. Dans d'autres modes de réalisation, la station hôte 300 communique avec le serveur distant 100 par l'intermédiaire d'un réseau sans fil, par exemple un réseau de téléphonie mobile (non représenté).

Les deuxièmes moyens de communication 450, 455 et 480, permettent la communication entre les premiers moyens de communication sécurisée, en particulier le microcontrôleur sécurisé 471 et la deuxième entité électronique portable 500.

L'entité électronique portable comporte aussi des moyens pour communiquer avec le serveur distant 100, par les premiers moyens de communication sécurisée. Ces moyens pour communiquer avec le serveur distant 100 comportent, notamment le programme 445, le bus USB et le hub USB 430. La communication au serveur distant concerne, en particulier, des données reçues de la deuxième entité électronique portable 500, par les deuxièmes moyens de communication.

Ainsi, la clef USB 400 est un moyen particulièrement simple par exemple pour installer à la fois un lecteur de cartes à puce et l'application capable de gérer la transaction qui fait intervenir, le lecteur, la carte et un serveur distant auprès duquel s'effectue l'achat ou plus généralement une transaction. Ce type de clef est commode à transporter, et largement reconnu et accepté par le public. Cette clef est, selon la présente invention utilisée pour sécuriser et effectuer des transactions sur n'importe qu'elle ordinateur personnel. Ainsi sécurisée par les moyens de communication sécurisés, la première entité électronique portable joue le rôle de terminal sécurisé.

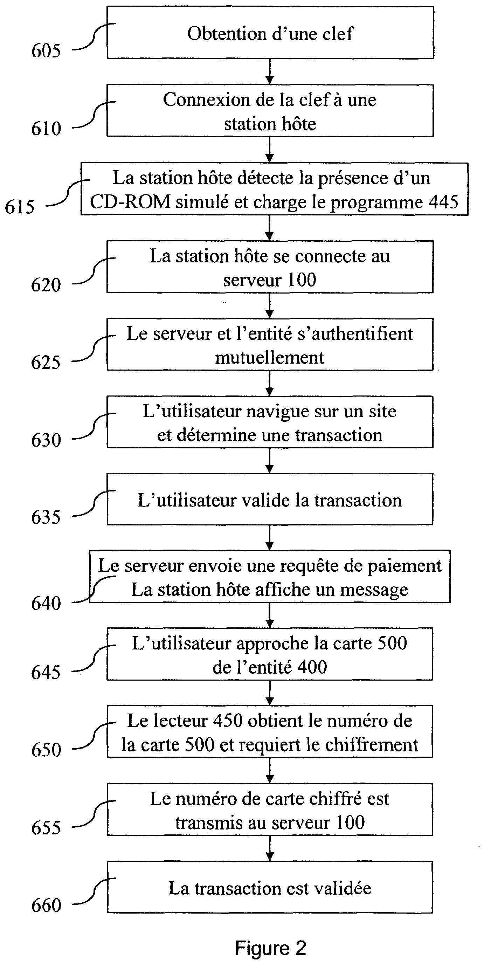

Dans des modes de réalisation, les deuxièmes moyens de communication comportent des moyens de sécurisation, comme exposé en regard de la figure 2. Ainsi, il n'est pas possible d'espionner la communication entre la deuxième entité électronique 500 et les moyens de communication sécurisée de l'entité électronique portable 400, pour obtenir, par exemple, le numéro de la carte bancaire 500.

On note que, dans des modes de réalisation, on se passe de cette sécurisation, notamment dans le cas où l'entité électronique portable, par construction ou de par sa sécurisation, ne peut, par exemple, pas être l'objet d'attaques de logiciels espions. C'est le cas par exemple si le chargement de programmes espions, dans l'entité électronique portable, est impossible, du fait que le chargement de programmes dans cette entité est conditionnée à la présentation d'une clef sécrète.

Dans des modes de réalisation, les premiers moyens de communication sécurisée avec un serveur distant comportent des moyens d'authentification avec ledit serveur distant. Dans la figure 1, il s'agit des clefs 476 et 473.

Préférentiellement, les premiers moyens de communication sécurisée, avec le serveur distant 100, comportent des moyens de communication d'une donnée d'identification de la transaction. Dans ce cas, le microcontrôleur 471 transmet au serveur 100, en même temps que le numéro de la carte bancaire 500, par exemple, un code d'identification de l'entité électronique portable 400 ou un numéro de série de la transaction, ou des informations physique concernant la transaction, telles que la date ou l'heure.

Dans des modes de réalisation, les premiers moyens de communication sécurisée avec un serveur distant 100 et/ou les moyens de sécurisation comportent des moyens cryptographiques de type connu.

Dans des modes de réalisation, on met en oeuvre, à la place ou en complément des moyens cryptographiques, une sécurisation physique de l'entité électronique portable 400, par exemple, en coulant les composants de cette entité 400, sauf le connecteur USB, dans une matière plastique.

Dans des modes de réalisation, tel que celui illustré en figure 1, les deuxièmes moyens de communication sont des moyens de communication sans fils, par exemple des moyens de communication à courte portée, c'est à dire inférieure à 1 mètre, pour limiter, par exemple, les risques de piratage des communications entre l'entité 400 et la deuxième entité électronique portable 500 et/ou pour permettre la réalisation d'une transaction basée sur un geste volontaire du porteur puisque le porteur doit approcher une carte sans contact de l'entité 400.

Dans des modes de réalisation, la deuxième entité électronique portable 500 est un téléphone mobile comportant des moyens de communication sans contact à très courte portée.

Dans le mode de réalisation illustré en figure 1, les deuxièmes moyens de communication sont formés par le lecteur 450 de la carte à microcircuit 500. Préférentiellement, ce lecteur 450 est conforme à la norme ISO 15693 en mode actif, ce qui lui permet de lire des cartes ou plus généralement des entités électroniques portables conformes à la norme ISO 14443,. Selon cette norme ISO 14443, le lecteur 450 alimente et envoie des commandes à une entité électronique portable 500 par émission d'un champ électromagnétique. Pour répondre, l'entité électronique 500 répond par rétro-modulation de ce champ électromagnétique.

En variante, les microcontrôleurs 440 et 471 peuvent être regroupés au sein d'une même carte à microcircuit possédant une interface USB.

En variante, le lecteur 460 est supprimé, notamment dans le cas où 470 n'est pas une carte à microcircuit mais est remplacé par des moyens de sécurisation, de chiffrement et/ou d'authentification d'un autre type.

On observe que chacune des entités électroniques, ainsi que la carte à puce 470 peut est intégrée dans un téléphone mobile, un assistant personnel numérique (en anglais « personal digital assistant » ou PDA) ou un smartphone regroupant ces deux fonctions.

On observe, en figure 2, que, dans un mode de réalisation particulier, le procédé objet de la présente invention, qui peut être mis en oeuvre par les éléments illustrés en figure 1, comportent, tout d'abord, une étape 605, au cours de laquelle un utilisateur, aussi appelé « client », obtient, de manière connue en soi, une entité électronique portable de la part d'un gestionnaire de site, par exemple une société commerciale.

Puis, au cours d'une étape 610, l'utilisateur connecte l'entité électronique portable 400 à la station hôte 300 par l'intermédiaire des connecteurs USB 320 et 420.

Au cours d'une étape 615, la station hôte 300 détecte la présence d'un CD-ROM (en fait le lecteur de CD-ROM simulé par le microcontrôleur 440) et d'un programme 445 de type « autorun », charge dans sa mémoire le programme 445 et l'exécute.

Au cours d'une étape 620, la station hôte 300 exécutant le programme 445 se connecte au serveur 100 pour servir d'intermédiaire dans la communication entre l'entité électronique portable 400 et le serveur 100, c'est-à-dire qu'il transmet à l'un des messages en provenance de l'autre en utilisant les moyens cryptographiques de 471.

Au cours d'une étape 625, le serveur 100 et l'entité électronique portable 400 s'authentifient mutuellement en mettant en oeuvre les clefs maîtres 110 et 473 qu'ils conservent respectivement et qui se correspondent et les moyens cryptographiques 471. Le serveur 100 et l'entité électronique portable 400 créent alors ensemble une clef commune temporaire, ou clef de session, à partir de la clef maître 473 et du numéro de série 474 de la carte 470. A cet effet, on met en oeuvre l'une des méthodes de génération de clef de session connues de l'homme du métier.

On note qu'éventuellement et de manière connue en soi, le serveur 100 peut mémoriser des préférences ou un profil de l'utilisateur.

Au cours d'une étape 630, l'utilisateur navigue sur le site marchand hébergé par le serveur 100, à l'aide du programme 445 exécuté par la station hôte 300 en ce qui concerne la communication sécurisée avec le serveur 100, en utilisant l'interface homme-machine de la station hôte 300, éventuellement en collaboration avec son navigateur sur internet.

Au cours d'une étape 635, l'utilisateur valide, auprès du serveur 100, l'objet de la transaction qu'il a choisi, à l'aide du programme 445 exécuté par la station hôte 300.

Au cours d'une étape 640, le serveur 100 envoie une requête de paiement au programme 445 exécuté sur la station hôte 300 et celui-ci affiche un message sur l'écran de la station hôte 300 pour demander à l'utilisateur de procéder au paiement et, pour ce faire, d'approcher la carte bancaire 500 de l'entité électronique portable 400. Parallèlement, le programme 445 envoie un message de préparation au lecteur 450 pour lui demander de transférer les informations qu'il recevra de la carte bancaire 500 au lecteur de carte 460, par l'intermédiaire du lien 480.

Au cours d'une étape 645, l'utilisateur approche la carte bancaire 500 de l'entité électronique portable 400. Au cours d'une étape 650, le lecteur 450 obtient le numéro de la carte bancaire 500 et envoie un message de notification au programme 445 exécuté sur la station hôte 300. En réponse, le programme 445 exécuté sur la station hôte 300 interroge la carte à microcircuit 470 pour recevoir le numéro de la carte 500, sous forme chiffrée. Parallèlement, le lecteur 450 transmet le numéro de la carte bancaire 500 au lecteur de carte 460 par l'intermédiaire du lien 480 et le lecteur de carte 460 transmet le numéro de la carte 500 à la carte à microcircuit 470 et, plus précisément, au microcontrôleur 471.

Au cours d'une étape 655, le microcontrôleur 471 transmet au serveur 100 le numéro de la carte bancaire 500 chiffré avec la clef commune, ou clef de session, par l'intermédiaire du programme 445 exécuté sur la station hôte 300.

Au cours d'une étape 660, la transaction est validée par le serveur 100 et confirmée à l'utilisateur, de manière connue en soi.

On note qu'en variante, au lieu d'utiliser le lien 480, la deuxième entité électronique portable 500 et le microcontrôleur 471 communiquent de façon chiffrée par l'intermédiaire du programme 445 exécuté par la station hôte 300 en utilisant des moyens cryptographiques dont ils disposent.

## Revendications

1. Entité électronique portable de poche (400) pour effectuer une transaction à un serveur distant (100) avec une deuxième entité électronique portable (500), l'entité électronique portable de poche (400) comportant des moyens de
connexion amovibles (420) à une station hôte (300), **caractérisée en ce qu'**elle comporte, en outre :
- des premiers moyens de communication sécurisée (460, 470, 471) avec le serveur distant (100) par l'intermédiaire desdits moyens de connexion et de ladite station hôte,
- des deuxièmes moyens de communication (450, 455) entre lesdits premiers moyens de communication sécurisée est la deuxième entité électronique portable (500)
- des moyens (440, 445) pour communiquer audit serveur distant, par lesdits premiers moyens de communication sécurisée, des données reçues de la deuxième entité électronique portable, par les deuxièmes moyens de
communication, et
- des moyens de mémorisation (440) d'un programme de gestion de la transaction (445) avec ledit serveur distant (100) apte à être exécuté par ladite station hôte (300), ledit programme de gestion (445) étant chargé et exécuté sur détection de la connexion de l'entité électronique portable de poche (400) à la station hôte (300), permettant au serveur distant (100) et à l'entité électronique portable de poche (400) de s'authentifier mutuellement en mettant en oeuvre des clés maîtres (473,476) qu'ils conservent respectivement et qui se correspondent et des moyens cryptographiques (471) de l'entité électronique portable de poche (400), le serveur distant (100) et l'entité électronique portable de poche (400) créant une clé commune temporaire à partir de la clé maître et d'un numéro de série (474) d'une carte à microcircuit (470) de l'entité électronique portable de poche (400),
les moyens cryptographiques (471) étant utilisés par les premiers moyens de communication sécurisée pour chiffrer lesdites données reçues de la deuxième entité électronique portable (500) avec la clef commune temporaire pour ladite communication audit serveur distant (100).

2. Entité selon la revendication 1, **caractérisée en ce qu'**au moins un desdits deuxièmes moyens de communication (455, 470) comporte des moyens de sécurisation (471).

3. Entité selon la revendication 2, **caractérisée en ce que** les moyens de sécurisation (470) comportent des moyens cryptographiques (470, 473).

4. Entité selon l'une quelconque des revendications 1 à 3, **caractérisée en ce que** les premiers moyens de communication (460, 470, 471) sécurisée avec un serveur distant (100) comportent des moyens d'authentification (471, 473) avec ledit serveur distant.

5. Entité selon l'une quelconque des revendications 1 à 4, **caractérisée en ce que** les premiers moyens de communication sécurisée (460, 470, 471), avec un serveur distant (100), comportent des moyens de communication d'une donnée d'identification de la transaction.

6. Entité selon l'une quelconque des revendications 1 à 5, **caractérisée en ce que** les premiers moyens de communication sécurisée (460, 470, 471) avec un serveur distant (100) comportent les moyens cryptographiques (471, 473).

7. Entité selon l'une quelconque des revendications 1 à 6, **caractérisée en ce que** les deuxièmes moyens de communication (450, 455) sont des moyens de communication sans fils.

8. Entité selon la revendication 7, **caractérisée en ce que** les moyens de communication sans fils (450, 455) sont des moyens de communication à courte portée, inférieure à un mètre.

9. Entité selon l'une quelconque des revendications 1 à 8, **caractérisée en ce que** les deuxièmes moyens de communication (450, 455) sont formés par un lecteur d'entité électronique portable.

10. Entité selon la revendication 9, **caractérisée en ce que** le lecteur d'entité électronique portable (450, 455) est un lecteur de carte à microcircuit.

11. Entité selon la revendication 10, **caractérisée en ce que** le lecteur de carte à microcircuit (450, 455) est conforme à la norme ISO 15693.

12. Entité selon l'une quelconque des revendications 1 à 11, **caractérisée en ce que** les premiers moyens de communication sécurisée (460, 470, 471) comportent la carte à microcircuit (470).

13. Entité électronique portable selon l'une quelconque des revendications 1 à 12, **caractérisée en ce qu'**elle est une clef électronique dite « USB » (acronyme de « Universal Serial Bus » pour bus série universel).

## Patentansprüche

1. Tragbare elektronische Entität im Taschenformat (400) zum Durchführen einer Transaktion an einem entfernten Server (100) mit einer zweiten tragbaren elektronischen Entität (500), wobei die tragbare elektronische Entität im Taschenformat (400) lösbare Mittel zur Verbindung (420) mit einer Hoststation (300) aufweist, **dadurch gekennzeichnet, dass** sie außerdem aufweist:
- erste Mittel zur sicheren Kommunikation (460, 470, 471) mit dem entfernten Server (100) über die Verbindungsmittel und die Hoststation,
- zweite Mittel zur Kommunikation (450, 455) zwischen den ersten Mitteln zur sicheren Kommunikation und der zweiten tragbaren elektronischen Entität (500),
- Mittel (440, 445) zum Übermitteln an den entfernten Server, durch die ersten Mittel zur sicheren Kommunikation, von Daten, die durch die zweiten Kommunikationsmittel von der zweiten tragbaren elektronischen Entität empfangen wurden, und
- Mittel zur Speicherung (440) eines Programms zur Verwaltung der Transaktion (445) mit dem entfernten Server (100), das geeignet ist, von der Hoststation (300) ausgeführt zu werden, wobei das Verwaltungsprogramm (445) bei Erkennung der Verbindung der tragbaren elektronischen Entität im Taschenformat (400) an der Hoststation (300) geladen und ausgeführt wird, wobei es dem entfernten Server (100) und der tragbaren elektronischen Entität im Taschenformat (400) ermöglicht, sich gegenseitig zu authentifizieren, indem sie Hauptschlüssel (473, 476), welche sie jeweils aufbewahren und welche sich entsprechen, und kryptographische Mittel (471) der tragbaren elektronischen Entität im Taschenformat (400) einsetzen, wobei der entfernte Server (100) und die tragbare elektronische Entität im Taschenformat (400) aus dem Hauptschlüssel und einer Seriennummer (474) einer Mikroschaltungskarte (470) der tragbaren elektronischen Entität im Taschenformat (400) einen temporären gemeinsamen Schlüssel erzeugen, wobei die kryptographischen Mittel (471) von den ersten Mitteln zur sicheren Kommunikation verwendet werden, um die Daten, die von der zweiten tragbaren elektronischen Entität (500) empfangen wurden, für die Kommunikation mit dem entfernten Server (100) mit dem temporären gemeinsamen Schlüssel zu verschlüsseln.

2. Entität nach Anspruch 1, **dadurch gekennzeichnet, dass** wenigstens eines der zweiten Kommunikationsmittel (455, 470) Sicherungsmittel (471) umfasst.

3. Entität nach Anspruch 2, **dadurch gekennzeichnet, dass** die Sicherungsmittel (470) kryptographische Mittel (470, 473) umfassen.

4. Entität nach einem der Ansprüche 1 bis 3, **dadurch gekennzeichnet, dass** die ersten Mittel zur sicheren Kommunikation (460, 470, 471) mit einem entfernten Server (100) Mittel zur Authentifizierung (471, 473) mit dem entfernten Server umfassen.

5. Entität nach einem der Ansprüche 1 bis 4, **dadurch gekennzeichnet, dass** die ersten Mittel zur sicheren Kommunikation (460, 470, 471) mit einem entfernten Server (100) Mittel zur Übermittlung eines Datenelements zur Identifikation der Transaktion umfassen.

6. Entität nach einem der Ansprüche 1 bis 5, **dadurch gekennzeichnet, dass** die ersten Mittel zur sicheren Kommunikation (460, 470, 471) mit einem entfernten Server (100) die kryptographischen Mittel (471, 473) umfassen.

7. Entität nach einem der Ansprüche 1 bis 6, **dadurch gekennzeichnet, dass** die zweiten Kommunikationsmittel (450, 455) Mittel zur drahtlosen Kommunikation sind.

8. Entität nach Anspruch 7, **dadurch gekennzeichnet, dass** die Mittel zur drahtlosen Kommunikation (450, 455) Mittel zur Kommunikation mit kurzer Reichweite sind, die weniger als einen Meter beträgt.

9. Entität nach einem der Ansprüche 1 bis 8, **dadurch gekennzeichnet, dass** die zweiten Kommunikationsmittel (450, 455) von einem Lesegerät für tragbare elektronische Entitäten gebildet werden.

10. Entität nach Anspruch 9, **dadurch gekennzeichnet, dass** das Lesegerät für tragbare elektronische Entitäten (450, 455) ein Mikroschaltungskarten-Lesegerät ist.

11. Entität nach Anspruch 10, **dadurch gekennzeichnet, dass** das Mikroschaltungskarten-Lesegerät (450, 455) mit der Norm ISO 15693 konform ist.

12. Entität nach einem der Ansprüche 1 bis 11, **dadurch gekennzeichnet, dass** die ersten Mittel zur sicheren Kommunikation (460, 470, 471) die Mikroschaltungskarte (470) umfassen.

13. Tragbare elektronische Entität nach einem der Ansprüche 1 bis 12, **dadurch gekennzeichnet, dass** sie ein elektronischer Schlüssel ist, der als "USB-Stick" (Akronym für "Universal Serial Bus", für universeller serieller Bus) bezeichnet wird.

## Claims

1. Pocket portable electronic entity (400) for effecting a transaction at a remote server (100) with a second portable electronic entity (500), the pocket portable electronic entity (400) including means (420) for removable connection to a host station (300), **characterized in that** it further includes:
- first means (460, 470, 471) for secure communication with the remote server (100) via said connection means and said host station,
- second means (450, 455) for communication between said secure first communication means and the second portable electronic entity (500),
- means (440, 445) for communicating to said remote server via said secure first communication means data received from the second portable electronic entity via the second communication means, and
- means (440) for storing a program for managing the transaction (445) with said remote server (100) adapted to be executed by said host station (300), said management program (445) being loaded and executed on detection of the connection of the pocket portable electronic entity (400) to the host station (300), allowing the remote server (100) and the pocket portable electronic entity (400) to mutually authenticate using master keys (473, 476) that they respectively hold and that correspond to each other and cryptographic means (471) of the pocket portable electronic entity (400), the remote server (100) and the pocket portable electronic entity (400) creating a temporary common key from the master key and from a serial number (474) of a microcircuit card (470) of the pocket portable electronic entity (400), the cryptographic means (471) being used by the first secure communication means to encrypt said data received from the second portable electronic entity (500) with the temporary common key for said communication to said remote server (100).

2. Entity according to Claim 1, **characterized in that** at least one of said second communication means (455, 470) includes security means (471).

3. Entity according to Claim 2, **characterized in that** the security means (470) include cryptographic means (470, 473).

4. Entity according to any one of Claims 1 to 3, **characterized in that** the first means (460, 470, 471) for secure communication with a remote server (100) include means (471, 473) for authentication with said remote server.

5. Entity according to any one of Claims 1 to 4, **characterized in that** the first means (460, 470, 471) for secure communication with a remote server (100) include means for communicating transaction identification data.

6. Entity according to any one of Claims 1 to 5, **characterized in that** the first means (460, 470, 471) for secure communication with a remote server (100) include the cryptographic means (471, 473).

7. Entity according to any one of Claims 1 to 6, **characterized in that** the second communication means (450, 455) are wireless communication means.

8. Entity according to Claim 7, **characterized in that** the wireless communication means (450, 455) are short range, less than one meter, communication means.

9. Entity according to any one of Claims 1 to 8, **characterized in that** the second communication means (450, 455) are formed by a portable electronic entity reader.

10. Entity according to Claim 9, **characterized in that** the portable electronic entity reader (450, 455) is a microcircuit card reader.

11. Entity according to Claim 10, **characterized in that** the microcircuit card reader (450, 455) conforms to the ISO 15693 standard.

12. Entity according to any one of Claims 1 to 11, **characterized in that** the first means (460, 470, 471) for secure communication include the microcircuit card (470).

13. Portable electronic entity according to any one of Claims 1 to 12, **characterized in that** it is a USB (Universal Serial Bus) electronic key.
